# EUROPÄISCHE PATENTANMELDUNG

(11) **EP 4 101 603 A1**
(43) Veröffentlichungstag der Anmeldung: **14.12.2022**
(21) Anmeldenummer: 22162224.4
(22) Anmeldetag: 15.03.2022
(51) Int. Cl.: B25J 9/16, G05B 9/02, G05B 19/048

(54) **SPEICHERPROGRAMMIERBARE STEUERUNG MIT INTEGRIERTER SICHERHEITSRELAISFUNKTION**

(30) Priorität: 10.06.2021 DE 202021103151 U
(71) Anmelder: Inter Control Hermann Köhler Elektrik GmbH & Co. KG, 90411 Nürnberg (DE)
(72) Erfinder: STRATMANN, Joachim, 92348 Berg (DE); EMMERLING, Hans-Jürgen, 91177 Thalmässing (DE)
(74) Vertreter: Stippl Patentanwälte

(57) **Zusammenfassung**

Speicherprogrammierbare Steuerung (SPS) mit integrierter Sicherheitsrelaisfunktion, wobei die Steuerung (SPS) eine Funktion zum Not-Halt (NH) umfasst, und die Steuerung (SPS) mindestens einen Ausgang (A) umfasst, wobei die Relaisfunktion als Sicherheitsfunktion ausgestaltet ist, wobei die Sicherheitsfunktion zwei Sicherheitskreise (S1, S2) umfasst, wobei der erste Sicherheitskreis über einen ersten Kanal der Sicherheitsfunktion (K1) und der zweite Sicherheitskreis über einen zweiten Kanal der Sicherheitsfunktion (K2) schaltbar ist, wobei durch Aktivierung eines Kanals (K1, K2) der Ausgang (A) in einen sicheren Zustand schaltbar ist und der erste Kanal der Sicherheitsfunktion (K1) und der zweite Kanal der Sicherheitsfunktion (K2) über die Funktion zum Not-Halt (NH) gleichzeitig schaltbar sind, wobei ein Steuerausgang (SA) vorgesehen ist, durch welchen der mindestens eine Ausgang (A) schaltbar ist, wobei der Steuerausgang (SA) mit dem ersten Kanal der Sicherheitsfunktion (K1) logisch mit UND verbunden ist, und wobei mindestens ein individueller Steuerausgang (Q) vorgesehen ist, durch welchen der mindestens eine Ausgang (A) individuell schaltbar ist, sodass der Ausgang (A) durch den individuellen Steuerausgang (Q) schaltbar ist, und wobei der mindestens eine individuelle Steuerausgang (Q) mit dem zweiten Kanal der Sicherheitsfunktion (K2) logisch mit UND verbunden ist.

## Beschreibung

Die vorliegende Erfindung betrifft eine speicherprogrammierbare Steuerung gemäß dem Oberbegriff des Anspruchs 1.

### Technologischer Hintergrund

Bei mobilen Arbeitsmaschinen werden häufig Steuerungen eingesetzt um komplexe Funktionen der Arbeitsmaschine zu steuern und zu regeln. Wenn durch die Funktionen z. B. einer Hubarbeitsbühne, eine Gefährdung von Material oder Personen nicht ausgeschlossen werden können, muss die Steuerung erhöhten Sicherheitsanforderungen genügen. Hierbei stellt sich die Aufgabe, dass das geforderte Sicherheitsniveau erreicht wird und gleichzeitig die speziellen Anforderungen aus dem Bereich mobiler Maschinen erfüllt werden. Die steigenden funktionalen Anforderungen an mobile Maschinen und die gleichzeitige Notwendigkeit, die einschlägigen Sicherheitsstandards zu erfüllen, stellen eine Herausforderung dar. Dabei führen insbesondere die Umgebungsbedingungen wie extreme Temperaturen, Schock und Vibrationen, Staub und Wasser dazu, dass Sicherheitsanforderungen deutlich schwieriger zu realisieren sind als beispielsweise im Bereich der Fabrikautomation. Die Verfügbarkeit entsprechender Sicherheitskomponenten ist daher oft deutlich eingeschränkt. Übergeordnete Sicherheitsnormen werden vor allem in Hinblick auf stationäre Maschinen und Anlagen entwickelt, was deren Umsetzung im Bereich der mobilen Maschinen erschwert. Diese Sicherheitsanforderungen sind unter anderem in den Normen DIN EN ISO 13849-1:2016-06, DIN EN ISO 13850:2016-05 sowie DIN EN 60947-5-5:2017-08 verankert.

### Nächstliegender Stand der Technik

Die EP 2 388 110 A1 offenbart eine Steuereinheit (insbesondere für Roboter) mit einer Manipulatorsteuerung und einer integrierten Steuereinrichtung zur Sicherheitsüberwachung. In die Steuereinrichtung zur Sicherheitsüberwachung, welche vom Anwender nicht konfiguriert werden kann, ist eine Sicherheitseinrichtung, welche vom Anwender konfiguriert werden kann, hardware- und/oder softwaretechnisch integriert. Die Steuereinrichtung ist ferner in die Manipulatorsteuerung integriert und software- und/oder hardwaretechnisch in dieser implementiert.

Die DE 10 2012 001 615 A1 beschreibt eine Modulanordnung mit einer Anzahl von Reihenmodulen zur Ansteuerung von Aktoren in der Automatisierungstechnik. Ein Reihenmodul umfasst eine Steuereinrichtung zur Ansteuerung eines Ausgangsmoduls und ein Sicherheitsmodul mit einer Sicherheitsschaltvorrichtung. Die Sicherheitsschaltvorrichtung kann einzelne Ausgänge abschalten oder eine Sicherheitsanforderung auslösen.

Die DE 10 2013 019 446 A1 offenbart eine Steuerung für mobile Arbeitsmaschinen mit Aktoren. Eine in die Steuerung integrierte Diagnosefunktion überwacht die Ein- und Ausgänge der Steuerung zu den Aktoren. Im Fehlerfall kann die Diagnosefunktion einzelne Ausgänge oder eine Gruppe von Ausgängen abschalten, welche von dem Fehlerfall betroffen sind oder mit den vom Fehlerfall betroffenen Ausgängen sicherheitsmäßig verknüpft sind.

### Aufgabe der vorliegenden Erfindung

Die Aufgabe der vorliegenden Erfindung besteht darin, eine neuartige speicherprogrammierbare Steuerung zur Verfügung zu stellen, bei der die Reduzierung des Montageaufwands und die Vermeidung von fehleranfälligen elektromechanischen Bauteilen bei Einhaltung der Sicherheitsanforderungen ermöglicht wird.

### Lösung der Aufgabe

Die vorstehende Aufgabe wird durch die gesamte Lehre des Anspruchs 1 gelöst. Zweckmäßige Ausgestaltungen der Erfindung sind in den Unteransprüchen beansprucht.

Erfindungsgemäß ist eine speicherprogrammierbare Steuerung mit einer integrierten Sicherheitsrelaisfunktion vorgesehen, wobei die Steuerung eine Funktion zum Not-Halt umfasst, und die Steuerung mindestens einen Ausgang umfasst, dadurch gekennzeichnet, dass die Relaisfunktion als Sicherheitsfunktion ausgestaltet ist, wobei die Sicherheitsfunktion zwei Sicherheitskreise umfasst, wobei der erste Sicherheitskreis über einen ersten Kanal der Sicherheitsfunktion und der zweite Sicherheitskreis über einen zweiten Kanal der Sicherheitsfunktion schaltbar ist, wobei durch Aktivierung eines Kanals der Ausgang in einen sicheren Zustand schaltbar ist und der erste Kanal der Sicherheitsfunktion und der zweite Kanal der Sicherheitsfunktion über die Funktion zum Not-Halt gleichzeitig schaltbar sind, wobei ein Steuerausgang vorgesehen ist, durch welchen der mindestens eine Ausgang schaltbar ist, wobei der Steuerausgang mit dem ersten Kanal der Sicherheitsfunktion logisch mit UND verbunden ist, und wobei mindestens ein individueller Steuerausgang vorgesehen ist, durch welchen der mindestens eine Ausgang individuell schaltbar ist, sodass der Ausgang durch den individuellen Steuerausgang schaltbar ist, und wobei der mindestens eine individuelle Steuerausgang mit dem zweiten Kanal der Sicherheitsfunktion logisch mit UND verbunden ist.

Zweckmäßigerweise kann die Steuerung mindestens zwei Ausgänge umfassen, wobei durch Aktivierung eines Kanals die Ausgänge in einen sicheren Zustand schaltbar sind, wobei ein Steuerausgang vorgesehen ist, durch welchen die mindestens zwei Ausgänge gleichzeitig schaltbar sind, und wobei mindestens zwei individuelle Steuerausgänge vorgesehen sind, durch welche die mindestens zwei Ausgänge individuell schaltbar sind, sodass der erste Ausgang durch den ersten individuellen Steuerausgang und der zweite Ausgang durch den zweiten individuellen Steuerausgang schaltbar ist, und wobei die mindestens zwei individuellen Steuerausgänge mit dem zweiten Kanal der Sicherheitsfunktion jeweils logisch mit UND verbunden sind.

In der hier vorliegenden speicherprogrammierbaren Steuerung ist die Sicherheitsrelaisfunktion vorteilhafterweise in die Steuerung mit integriert, wodurch sich diese durch ihre Kompaktheit, Mobilität und Flexibilität auszeichnet. Die Sicherheitsrelaisfunktion kann somit in ein wasserdichtes Gehäuse integriert werden und ist anders als bei einem elektromechanischen Relais, welches beispielsweise bewegliche mechanische Komponenten aufweist, unempfindlich gegen Schock und Vibrationen. Die Sicherheitsrelaisfunktion weist vorzugsweise keine beweglichen mechanischen Komponenten auf, die durch Schock, Vibrationen oder durch vergleichbare äußere mechanische Einflüsse beeinflusst werden könnten. Das Gehäuse der speicherprogrammierbaren Steuerung kann beispielsweise der Schutzart IP6K9K oder IP6K7 entsprechen. Ferner kann das Gehäuse aus Aluminium gefertigt sein, insbesondere mit einem zusätzlichen Goretex-Filter. Es kann sich somit durch seine Salzwasserbeständigkeit sowie seine Beständigkeit gegen Stöße, Vibrationen und Steinschlag auszeichnen. Die erfindungsgemäße speicherprogrammierbare Steuerung stellt somit eine robuste Steuerung dar, welche durch die Integration der Sicherheitsrelaisfunktion eine kompakte Lösung darstellt. Sicherheitsrelais für Steuerungen sind für gewöhnlich als Hutschienen-Ausführung ausgestaltet, weshalb diese nicht in Steuerungen mit integriert sind. Die erfindungsgemäße speicherprogrammierbare Steuerung ist zweckmäßigerweise für die Verwendung in einer mobilen Arbeitsmaschine und/oder im Outdoor-Bereich unter freiem Himmel außerhalb einer geschützten Maschinenhalle vorgesehen.

Als sicherer Zustand wird ein Zustand bezeichnet, der durch Auslösen der Sicherheitsfunktion erreicht wird. Alle Leistungsausgänge, die der Not-Halt-Funktion zugeordnet sind, sind spannungslos. Eine Aktivierung dieser Ausgänge über die speicherprogrammierbare Steuerung ist durch Hardware-Schaltungsmaßnahmen in diesem Zustand nicht möglich. An den Leistungsausgängen können beispielsweise ein Motor, eine Pumpe oder ein Hydraulikzylinder angeschlossen sein, welche durch die Not-Halt Funktion stromlos geschaltet werden. Sofern eine stromlose Schaltung für einen sicheren Zustand des angeschlossenen Geräts nicht ausreichend ist, wie beispielsweise bei hängenden Lasten, kann eine zusätzliche mechanische Konstruktion, wie z. B. eine Bremse, notwendig sein. Eine solche Bremse kann zweckmäßigerweise in einem stromlosen Zustand schließen und im stromreichen Zustand öffnen.

Die Not-Halt Funktion wird durch eine Logikfunktion in der Hardware der speicherprogrammierbaren Steuerung realisiert, die zweckmäßigerweise durch einen externen Taster für den Not-Halt gestartet werden kann und die der Not-Halt Funktion zugeordneten Ausgänge in den sicheren Zustand versetzt. Zweckmäßigerweise kann eine Betätigung des Not-Halts zum Schalten der im Modul integrierten Sicherheitsrelaisfunktion führen, wodurch ein angeschlossener und angesteuerter Aktor stromlos und damit abgeschaltet wird. Die Not-Halt Funktion kann mittels einer Totmannüberwachung und/oder über einen Taster, welcher beispielsweise außen an der Maschine angebracht sein kann, ausgestaltet sein.

Der erste und zweite Sicherheitskreis können zweckmäßigerweise logisch mit ODER verbunden sein, derart, dass bereits das Auslösen eines Sicherheitskreises einen sicheren Zustand bewirkt.

Die speicherprogrammierbare Steuerung kann vorteilhafterweise eine bestimmte Ausgangsgruppe, welche mindestens einen Ausgang bzw. mindestens zwei Ausgänge umfasst, spannungslos schalten. Durch Betätigung der Not-Halt Funktion kann die zugeordnete Ausgangsgruppe vorteilhafterweise innerhalb weniger Millisekunden, insbesondere innerhalb von 100 ms, insbesondere innerhalb von 10 ms, insbesondere innerhalb von 1ms, spannungslos und somit energielos geschaltet werden. Die Abschaltzeit kann unabhängig vom Zyklus der speicherprogrammierbaren Steuerung sein, da diese zweckmäßigerweise ausschließlich durch Hardware-Komponenten realisiert werden kann. Als Abschaltzeit ist die maximal mögliche Zeitspanne zwischen dem Öffnen des Kontakts des Not-Halt Tasters und dem vollständigen Öffnen aller Leistungsschalter der Sicherheitsgruppe (erster Sicherheitskreis und zweiter Sicherheitskreis mit zugeordneten individuellen Ausgangsschaltern) definiert sein. Bei induktiven Lasten an diesen Ausgängen kann Strom über einen deutlich längeren Zeitraum anliegen. Somit wird dieser Zeitraum durch die angeschlossene Induktivität und die elektrischen Widerstände im jeweiligen Schaltzweig beeinflusst.

Vorteilhafterweise kann die Funktion zum Not-Halt durch einen Not-Halt-Taster, vorzugsweise mit mechanischer Verrastfunktion, schaltbar sein, wobei dem zweiten Kanal der Sicherheitsfunktion eine Haltefunktion für den Not-Halt vorgeschaltet ist, welche die Sicherheitsfunktion des zweiten Kanals aktiviert hält.

Die Not-Halt-Funktion kann vorteilhafterweise durch einen externen Not-Halt Taster, insbesondere mit mechanischer Verrastfunktion ausgelöst werden, was dazu dient, Gefahren in Notsituationen abzuwenden oder zu verhindern. Der Not-Halt Taster kann zweckmäßigerweise als externer mechanischer Not-Halt Taster mit mechanischer Verrastfunktion ausgestaltet sein, bestehend aus einem Öffner und einem Schließer, wobei der Öffner als zwangsgeführter Kontakt ausgeführt ist. Der Not-Halt Taster kann zweckmäßigerweise einem elektrischen Not-Halt Gerät mit mechanischer Verrastfunktion nach DIN EN 60947-5-5:2017-8 entsprechen.

Analog einer Selbsthaltschaltung bei einem Relais kann es zweckmäßigerweise vorgesehen sein, dass die Haltefunktion Not-Halt den Zustand "Not-Halt ist aktiviert" speichert und somit die Sicherheitsfunktion aufrechterhält. Die Haltefunktion Not-Halt und damit die Sicherheitsfunktion kann somit vorteilhafterweise auch dann aufrechterhalten werden, wenn der Not-Halt Taster wieder, beispielsweise von einem Bediener, entriegelt worden ist. Damit kann ein erweiterter Wiederanlaufschutz erreicht werden, beispielsweise für Sicherheitstüren.

Zweckmäßigerweise kann in der generellen Umsetzung die Sicherheitsfunktion über einen externen Not-Halt Taster ausgelöst werden. Bei gedrücktem Not-Halt Taster kann die Sicherheitsfunktion vorteilhafterweise zweikanalig die zugeordnete Ausgangsgruppe spannungslos schalten. Die Sicherheitsfunktion kann dabei vorteilhafterweise ausschließlich in Hardware realisiert sein. Beispielsweise kann eine Ausgangsgruppe mit mindestens zwei Leistungsausgängen, insbesondere mit acht Leistungsausgängen, für diese Sicherheitsfunktion vorgesehen sein. Leistungsschalter können vorteilhafterweise mit Leistungs-MOS-FETs realisiert werden.

In einer weiteren Ausgestaltung der speicherprogrammierbaren Steuerung kann eine Funktion zum Reset für den Not-Halt vorgesehen sein, durch welchen die Haltefunktion für den Not-Halt schaltbar ist. Die Haltefunktion Not-Halt kann vorteilhafterweise über einen Reset Eingang an der Haltefunktion zurückgesetzt werden. Über den Reset Eingang oder über einen weiteren Eingang an der Haltefunktion Not-Halt kann ein automatischer oder ein manueller Start nach dem Eintritt eines Not-Halts durch die Not-Halt Funktion ausgelöst werden. Die Art des Wiederanlaufs kann vorteilhafterweise in der Software bzw. der Applikation der speicherprogrammierbaren Steuerung konfiguriert werden.

Zweckmäßigerweise kann die Funktion zum Reset für den Not-Halt durch einen manuell zu bedienenden Taster schaltbar sein, wobei die Ausgänge gesetzte Ausgangszustände annehmen. Die gesetzten Ausgangszustände können hierbei über die Art des Wiederanlaufs bestimmt werden. Der manuelle Start stellt eine mögliche Konfigurationseinstellung des Wiederanlaufschutzes der speicherprogrammierbaren Steuerung dar. Hierbei wird die Haltefunktion Not-Halt über einen manuell zu bedienenden Taster (Taster Reset Not-Halt) zurückgesetzt. Für den Taster des Resets Not-Halt kann zweckmäßigerweise ein externer mechanischer Taster ohne mechanische Verrastfunktion vorgesehen sein, insbesondere bestehend aus einem Schließer. Über den Taster Reset Not-Halt kann ein der speicherprogrammierbaren Steuerung Anwender die Haltefunktion Not-Halt zurücksetzen.

Vorzugsweise kann der Taster zum Reset für den Not-Halt elektrisch gebrückt sein, so dass bei Entriegelung des Tasters für den Not-Halt die Haltefunktion für den Not-Halt zurückgesetzt wird. Der automatische Start stellt eine weitere mögliche Konfigurationseinstellung des Wiederanlaufschutzes der speicherprogrammierbaren Steuerung dar. Hierbei ist der Taster Reset Not-Halt zum Zurücksetzen der Haltefunktion elektrisch gebrückt, sodass durch die Entriegelung des Tasters für den Not-Halt sowie nach Freigabe durch eine Testeinheit, beispielsweise zur Firmware-Diagnose, die Haltefunktion für den Not-Halt zurückgesetzt wird.

Ferner besteht zweckmäßigerweise die Möglichkeit, dass eine Testeinrichtung vorgesehen ist, welche zyklische Tests zur Laufzeit auf potentielle Rückspeisungen durchführt. Die Testeinrichtung kann vorteilhafterweise eine Einrichtung zum sicherheitsrelevanten Testen der Not-Halt Funktion sein, ohne dass der Taster Not-Halt betätigt wird. Die Testeinrichtung kann aus Diagnoseschaltern bestehen, welche als Hardware-Komponenten ausgestaltet sind. Die speicherprogrammierbare Steuerung verfügt zweckmäßigerweise über einen Haupt-Mikroprozessor. Die Ansteuerung der Diagnoseschalter und die Rücklesung der diagnoserelevanten Logikpegel kann durch den Haupt-Mikroprozessor erfolgen, in welchem zudem das Steuerprogramm der Testeinrichtung abläuft. Insbesondere kann die Testeinrichtung ausschließlich vom Haupt-Mikroprozessor steuerbar sein.

Bei einem manuellen Start kann vorteilhafterweise durch die Betätigung des Tasters Reset Not-Halt die Testeinrichtung manuell gestartet werden. Bei einem automatischen Start bzw. wenn der Taster Reset Not-Halt zum Zurücksetzen der Haltefunktion elektrisch gebrückt ist, kann die Testeinrichtung vorteilhafterweise automatisch gestartet werden, sobald der Taster Not-Halt entriegelt ist. Im Verlauf des Tests oder nach erfolgtem Test durch die Testeinrichtung kann die Haltefunktion Not-Halt über einen Diagnoseschalter von der Testeinrichtung zurückgesetzt werden. Somit können die der Not-Halt Funktion zugeordneten Ausgänge die von der speicherprogrammierbaren Steuerung gesetzten Ausgangszustände annehmen, wenn die Testeinrichtung alle Tests erfolgreich abgeschlossen hat.

Zweckmäßigerweise ist der sichere Zustand ein spannungsloser oder energieloser Zustand ist, so dass die Ausgänge spannungslos oder energielos sind. Die speicherprogrammierbare Steuerung kann einen Software-Anteil sowie einen Hardware-Anteil umfassen, wobei die Software sowie die Hardware unabhängig voneinander die Ausgänge stromlos schalten können. Der Hardware-Anteil kann als redundante Sicherheit zum Software-Anteil dienen, so dass bei Versagen der Software bzw. der Firmware ein Stromlos-Schalten durch die Hardware-Komponenten weiterhin gewährleistet ist. Dadurch ergibt sich der Vorteil, dass der Zertifizierungsaufwand durch einen geringen Software-Anteil reduziert werden kann. Ferner kann die Sicherheitsfunktion ausschließlich durch die Hardware-Komponenten aktivierbar sein. Bei Ausfall der Software-Komponenten kann die Funktion zum Not-Halt weiterhin durch die Hardware-Komponenten aktivierbar sein. Es besteht damit die Möglichkeit, dass die Sicherheitsfunktion ausschließlich über Hardware-Komponenten und nicht über eine Software bzw. über eine Firmware der speicherprogrammierbaren Steuerung aktivierbar sein kann. Die Sicherheitsfunktion kann somit robuster gegenüber möglichen Programmierungsfehlern in der Software bzw. Firmware sein.

Vorteilhafterweise kann die speicherprogrammierbare Steuerung gemäß einer Sicherheitsnorm betreibbar sein, insbesondere gemäß DIN EN ISO 13849-1:2016-06, insbesondere, dass die Funktion zum Not-Halt (NH) nach DIN EN ISO 13849-1:2016-06 mindestens Performance Level d betreibbar ist. Die speicherprogrammierbare Steuerung oder deren Komponenten können vorteilhafterweise gemäß einer der Normen DIN EN ISO 13849-1:2016-06, DIN EN ISO 13850:2016-05 und/oder DIN EN 60947-5-5:2017-08 betreibbar sein.

Vorteilhafterweise kann die NOT-Halt-Funktion in der Stopp-Kategorie 0 als elektronisches Sicherheitsrelais realisiert werden. Die Not-Halt-Funktion in der Kategorie 0 nach DIN EN ISO 13850:2016-05 bedeutet ein sofortiges Stillsetzen durch Unterbrechung der Energiezufuhr zu den Maschinen-Antriebselementen. Diese Not-Halt-Funktion entspricht dem Performance Level d. Für den Anschluss der Not-Halt Geräte sind zwei digitale Eingänge der Steuerung zu definieren, die parallel als Input für die sicherheitsrelevante Abschaltung agieren. Über diese Eingänge erfolgt die sicherheitsrelevante zweikanalige Abschaltung mindestens eines Ausgangs bzw. der Ausgänge einer Ausgangsgruppe. Zweckmäßigerweise können in dieser Ausgangsgruppe sowohl digitale als auch PWM-Ausgänge vorhanden sein. In der Norm DIN EN ISO 13850:2016-05 ist in Kapitel 4.1.1.2 gefordert, dass "das Rücksetzen (der Not-Halt-Funktion) nicht die Ingangsetzung der Maschine einleiten darf". Daher besteht die Notwendigkeit eines zusätzlichen Eingangs zum Rücksetzen der Not-Halt-Funktion. Die Not-Halt-Funktion wird durch eine funktional sichere Hardware realisiert, da vorgesehen ist, nur diese Funktion zu zertifizieren und abzunehmen. Somit beschränkt sich der Entwicklungsaufwand hinsichtlich der funktionalen Sicherheit vorteilhafterweise nur auf die eingegrenzte Hardware. Die restliche Hardware und vor allem die Firmware müssen nicht zwangsläufig der funktionalen Sicherheit unterliegen.

Besonders zweckmäßig ist, dass die speicherprogrammierbare Steuerung als eine bauliche Einheit ausgestaltet ist, insbesondere mit der integrierten Sicherheitsrelaisfunktion. Dadurch ist eine kostengünstige Integration möglich. Zudem ist eine Dichtigkeit gegen Wasser und Staub in einfacher Weise zu gewährleisten sowie eine Festigkeit gegen äußere Einflüsse wie Stöße, Vibrationen und Steinschlag. Die speicherprogrammierbare Steuerung kann vorteilhafterweise auf einer Leiterplatte untergebracht sein, so dass die speicherprogrammierbare Steuerung auf der Leiterplatte eine bauliche Einheit darstellt.

Die erfindungsgemäße speicherprogrammierbare Steuerung ist vielseitig einsetzbar für verschiedene Anwendungsfälle. Im Straßen- und Erdbau kann die Steuerung für Straßenfräsen, Teerdeckenfertiger, Verdichter, Bagger, Minenbagger oder Tiefbohrmaschinen verwendet werden. Auch in der Logistik für den Containertransport, Gabelstapler, Portalhubwagen oder Fahrerlose Transportsysteme (FTS) kann die Steuerung eingesetzt werden. Zudem können Kommunalfahrzeuge wie Feuerwehrfahrzeuge, Straßenkehrfahrzeuge, Abfallsammelfahrzeuge oder Kanalreinigungs-LKWs gesichert werden. Ferner kann die Steuerung für Flughafenfahrzeuge wie Passagiertreppen oder Flugzeugschlepper verwendet werden.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: ein Blockschaltbild der speicherprogrammierbaren Steuerung mit zwei Sicherheitskreisen und acht Leistungsausgängen; und
- Fig. 2: ein Blockschaltbild der speicherprogrammierbaren Steuerung mit Testeinrichtung.

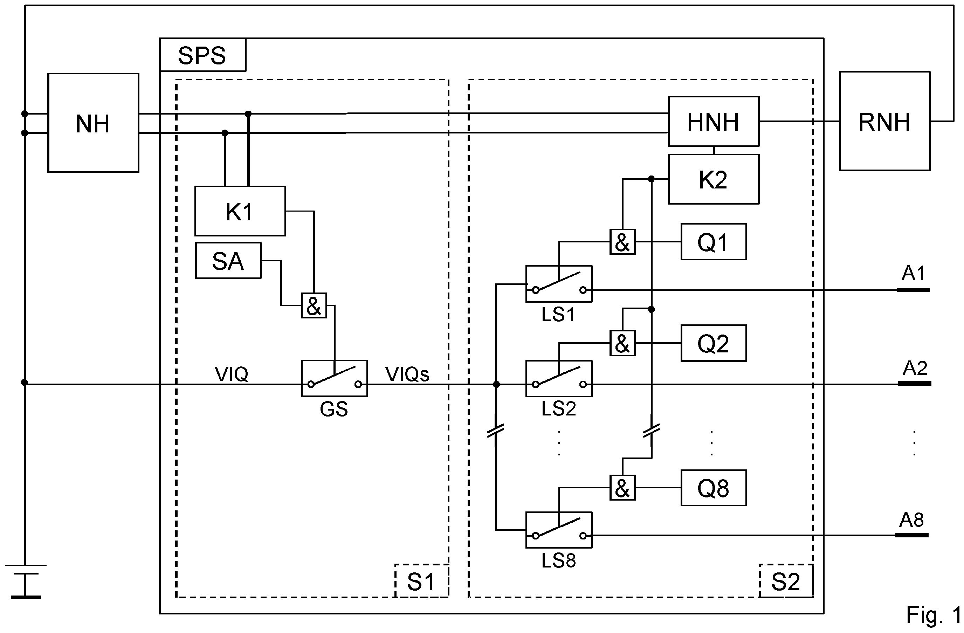

In Fig. 1 ist die speicherprogrammierbare Steuerung SPS in einer Ausgestaltung als Blockschaltbild dargestellt. Die speicherprogrammierbare Steuerung SPS wird durch eine extern bereit gestellte Spannungsversorgung VIQ gespeist. Die Spannungsversorgung VIQ dient zur Speisung der Leistungsausgänge A1 - A8 der speicherprogrammierbaren Steuerung SPS.

Die Sicherheitsfunktion ist über zwei Sicherheitskreise S1, S2 gewährleistet. Die Spannungsversorgung VIQ ist an den Eingang des ersten Sicherheitskreis S1 angelegt. Am Ausgang des ersten Sicherheitskreises S1 wird die Ausgangsspannung VIQs (VIQ switched) ausgegeben, welche wiederum am Eingang des zweiten Sicherheitskreises S2 anliegt. Die Leistungsausgänge A1 - A8 werden von den Ausgängen des zweiten Sicherheitskreises S2 angesteuert. Der erste und zweite Sicherheitskreis sind somit in Reihe geschaltet. Sofern mindestens einer der zwei Sicherheitskreise S1, S2 aktiviert wird, also die Spannungsversorgung unterbricht, werden die Leistungsausgänge A1 - A8 spannungslos geschaltet. Hinsichtlich der Spannungsunterbrechung arbeiten die Sicherheitskreise S1, S2 somit redundant. Die Leistungsausgänge A1 - A8 können durch einen Steuerausgang SA als gesamte Gruppe angesteuert werden, wobei der Steuerausgang SA der ersten Sicherheitsfunktion von Kanal K1 zugeordnet ist. Ferner können die Leistungsausgänge A1 - A8 durch Steuerausgänge Q1 - Q8 einzeln angesteuert werden, wobei die Steuerausgänge Q1 - Q8 der zweiten Sicherheitsfunktion von Kanal K2 zugeordnet sind.

Die Schalter, also die Leistungsschalter LS1 - LS8, der Gruppenschalter GS können vorteilhafterweise mit Leistungs-MOS-FETs realisiert werden. Das Schaltersymbol dient hierbei lediglich der vereinfachten Darstellung. Der erste Kanal K1 schaltet die "low aktive" erste Sicherheitsfunktion S1 und der zweite Kanal K2 schaltet die "low aktive" zweite Sicherheitsfunktion S2.

Den acht individuellen Ausgängen A1 - A8, die der Not-Halt Funktion zugeordnet sind, ist ein Gruppenschalter GS als zweiter Abschaltpfad vorgeschaltet. Die durch den Gruppenschalter GS kontrollierte Ausgangsspannung ist mit VIQs bezeichnet.

Der Gruppenschalter GS wird durch ein UND-Gatter angesteuert. Am ersten Eingang dieses UND-Gatters ist der Steuerausgang SA angeschlossen und am zweiten Eingang der erste Kanal K1 der Sicherheitsfunktion. Somit wird der Gruppenschalter GS im Notfall durch den ersten Kanal K1 der Sicherheitsfunktion geöffnet und schaltet die gesamte Ausgangsgruppe A1 - A8 spannungslos. Die individuellen Leistungsausgänge A1 - A8 werden von der Spannung VIQs gespeist. Angesteuert werden die individuellen Leistungsschalter LS1 - LS8 jeweils durch ein UND-Gatter. Am ersten Eingang dieser UND-Gatter sind die jeweiligen Steuerausgänge Q1 - Q8 angeschlossen und am zweiten Eingang der zweite Kanal K2 der Sicherheitsfunktion. Die individuellen Leistungsschalter LS1 - LS8 werden somit im Notfall durch den zweiten Kanal K2 der Sicherheitsfunktion geöffnet, wodurch die Ausgänge A1 - A8 spannungslos geschaltet werden. Die Signale des Steuerausgangs SA oder der Steuerausgänge Q1 - Q8 können jeweils entsprechend den Gruppenschalter GS oder die Leistungsschalter LS1 - LS8 nicht mehr aktivieren.

Aus Gründen des kontrollierten Wiederanlaufschutzes soll die Sicherheitsfunktion auch nach der Entriegelung des externen Nothalt-Tasters aufrechterhalten werden. Als Beispiel für einen derartigen Anwendungsfall sei eine Sicherheitstüre genannt. Der oben erwähnte NOT-HALT Taster ist mit dem Öffnen und Schließen dieser Sicherheitstüre gekoppelt. Durch das Öffnen der Türe wird die Sicherheitsfunktion aktiv und alle zugeordneten Ausgänge A1 - A8 werden zweikanalig abgeschaltet. Wird diese Türe wieder geschlossen, soll die Sicherheitsfunktion aufrechterhalten werden und alle zugeordneten Ausgänge A1 - A8 sollen weiterhin abgeschaltet bleiben. Daher wird nach Auslösen der Sicherheitsfunktion diese durch eine Haltefunktion HNH aufrechterhalten, ähnlich dem Selbsthaltemechanismus eines Relais, das durch einen Impuls angesteuert wird. Die Fig. 1 zeigt ebenfalls diese Erweiterung. Dem zweiten Kanal K2 der Sicherheitsfunktion wird die Haltefunktion NOT-HALT HNH vorgeschaltet. Beim Auslösen des NOT-HALT Tasters NH speichert die Haltefunktion NOT-HALT HNH den gedrückten Zustand des NOT-HALT Tasters NH und gibt diesen an den zweiten Kanal K2 der Sicherheitsfunktion weiter. Wird der NOT-HALT Taster NH wieder entriegelt, wird, wie in Fig. 1 gezeigt, der erste Kanal K1 der Sicherheitsfunktion inaktiv und der Gruppenschalter GS kann prinzipiell durch die speicherprogrammierbare Steuerung SPS wieder geschlossen werden. Der zweite Kanal K2 der Sicherheitsfunktion bleibt hingegen voll aktiviert. Die Haltefunktion NOT-HALT HNH kann nur über den Eingang RESET zurückgesetzt werden. Hierbei besteht die Möglichkeit, zwischen einem manuellen oder automatischen Start zu wählen. Damit bei gedrücktem Taster NOT-HALT NH die Haltefunktion NOT-HALT HNH nicht zurückgesetzt werden kann, muss das Setzen der Haltefunktion HNH Priorität vor dem Rücksetzen (Reset) haben.

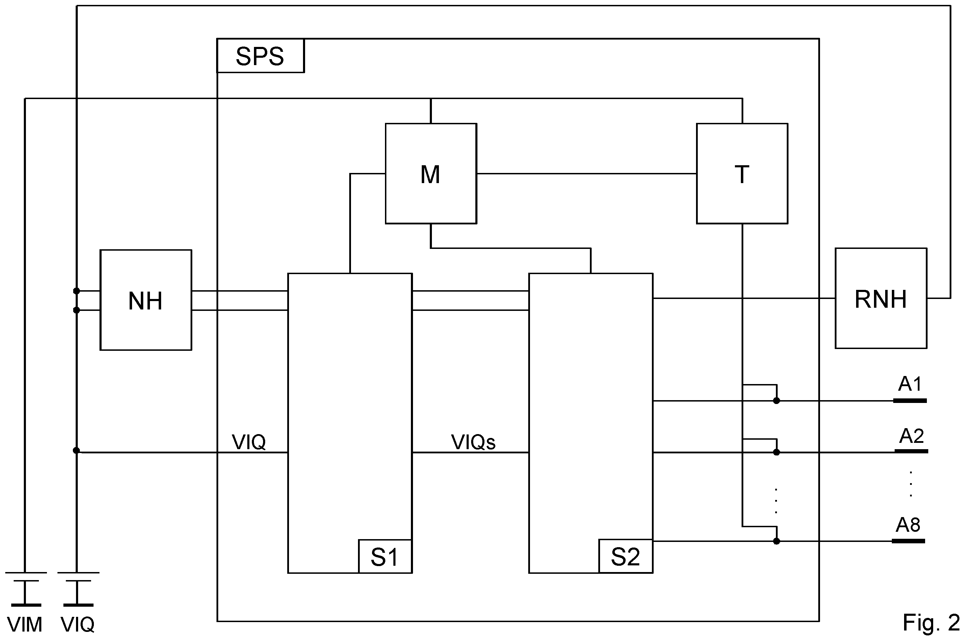

In Fig. 2 ist die speicherprogrammierbare Steuerung SPS in einer alternativen Ausgestaltung mit einer Testeinrichtung T dargestellt. Das korrekte Arbeiten der NOT-HALT Funktion wird mittels der Testeinrichtung T überprüft. Die Testeinrichtung ist mit dem Haupt-Mikroprozessor der speicherprogrammierbare Steuerung SPS verbunden und wird ausschließlich über diesen gesteuert. Der Haupt-Mikroprozessor M gewährleistet aufgrund seiner integrierten Sicherheitsstruktur eine sehr hohe Zuverlässigkeit. Die Testeinrichtung T führt zusätzlich Diagnosen zur Laufzeit bezüglich einer möglichen Rückspeisung durch. Hierfür ist die Testeinrichtung T zweckmäßigerweise mit den Leistungsausgängen A1 - A8 verbunden.

Die Testeinrichtung T initiiert den Zustand Not-Halt unmittelbar beim Hochfahren des Systems der speicherprogrammierbare Steuerung SPS. Nach der Entriegelung des Tasters Not-Halt NH wird ein manueller oder automatischer Start des Systems durchgeführt, zum Test der Not-Halt Funktion. Die Art des Startvorgangs, also manuell oder automatisch, ist abhängig von den Einstellungen des Systems.

Im laufenden System wird beispielsweise alle 50 ms ein zyklischer Test zur Laufzeit auf eine potentielle Rückspeisung durchgeführt. Hier wird insbesondere auf einen möglichen Kurzschluss der Ausgänge A1 - A8 der Not-Halt Gruppe gegen die Versorgungsspannung VIQ bzw. VIQs geprüft.

In einer beispielhaften Ausgestaltung führt eine Betätigung des Tasters NOT-HALT NH zur Aktivierung der Sicherheitsfunktion, die zweikanalig über die Sicherheitskreise S1 bzw. S2 alle Ausgänge A1 bis A8 sicher abschaltet. Selbst nach Entriegelung des Tasters NOT-HALT NH, bleibt die Sicherheitsfunktion über den zweiten Kanal K2 aktiv, wodurch alle Ausgänge A1 bis A8 sicher abgeschaltet bleiben. Die Betätigung des Tasters RESET NOT-HALT RNH durch den Anwender startet anschließend die Testeinrichtung T. Gesteuert wird die Testeinrichtung T durch den Haupt-Mikroprozessor M. In Abhängigkeit der Konfiguration kann die Testeinrichtung T im Falle eines automatischen Starts bereits durch die Entriegelung des Tasters NOT-HALT NH gestartet werden. Sofern die Testeinrichtung T einen Fehler erkennt, kann die Sicherheitsfunktion durch die Testeinrichtung T über Diagnoseschalter aktiviert bleiben. Die Sicherheitsfunktion kann dabei solange aufrechterhalten bleiben, bis der Anwender erneut eine Diagnose über die Betätigung des Tasters RESET NOT-HALT RNH startet. Eine mögliche Rückspeisung bei Kurzschluss eines Leistungsausganges A1 - A8 gegen die Versorgungsspannung VIQ bzw. VIQs wird durch die Laufzeit-Diagnose der Testeinrichtung T erkannt.

Der Haupt-Mikroprozessor M sowie die Testeinrichtung T werden über die Spannung VIM gespeist. Die Spannung VIM ist eine extern bereit gestellte Spannungsversorgung, die an die speicherprogrammierbare Steuerung SPS angelegt wird und zur Versorgung der Elektronik der speicherprogrammierbaren Steuerung SPS dient.

### BEZUGSZEICHENLISTE

- S1: Sicherheitskreis 1
- S2: Sicherheitskreis 2

- K1: Sicherheitsfunktion Kanal 1
- K2: Sicherheitsfunktion Kanal 2

- NH: Not-Halt
- HNH: Haltefunktion Not-Halt
- RNH: Reset Not-Halt

- SA: Steuerausgang
- Q1 - Q8: Steuerausgang Q1 - Q8
- A1 - A8: Leistungsausgang A1 - A8

- GS: Gruppenschalter
- LS: Leistungsschalter

- T: Testeinrichtung
- M: Haupt-Mikroprozessor

## Patentansprüche

1. Speicherprogrammierbare Steuerung (SPS) mit integrierter Sicherheitsrelaisfunktion, wobei die Steuerung (SPS) eine Funktion zum Not-Halt (NH) umfasst, und die Steuerung (SPS) mindestens einen Ausgang (A) umfasst,
**dadurch gekennzeichnet, dass**
die Relaisfunktion als Sicherheitsfunktion ausgestaltet ist, wobei
die Sicherheitsfunktion zwei Sicherheitskreise (S1, S2) umfasst, wobei der erste Sicherheitskreis über einen ersten Kanal der Sicherheitsfunktion (K1) und der zweite Sicherheitskreis über einen zweiten Kanal der Sicherheitsfunktion (K2) schaltbar ist, wobei
durch Aktivierung eines Kanals (K1, K2) der Ausgang (A) in einen sicheren Zustand schaltbar ist und
der erste Kanal der Sicherheitsfunktion (K1) und der zweite Kanal der Sicherheitsfunktion (K2) über die Funktion zum Not-Halt (NH) gleichzeitig schaltbar sind, wobei
ein Steuerausgang (SA) vorgesehen ist, durch welchen der mindestens eine Ausgang (A) schaltbar ist, wobei der Steuerausgang (SA) mit dem ersten Kanal der Sicherheitsfunktion (K1) logisch mit UND verbunden ist, und wobei
mindestens ein individueller Steuerausgang (Q) vorgesehen ist, durch welchen der mindestens eine Ausgang (A) individuell schaltbar ist, sodass der Ausgang (A) durch den individuellen Steuerausgang (Q) schaltbar ist, und wobei der mindestens eine individuelle Steuerausgang (Q) mit dem zweiten Kanal der Sicherheitsfunktion (K2) logisch mit UND verbunden ist.

2. Speicherprogrammierbare Steuerung (SPS) gemäß Anspruch 1, **dadurch gekennzeichnet, dass** die Steuerung (SPS) mindestens zwei Ausgänge (A1, A2) umfasst, wobei
durch Aktivierung eines Kanals (K1, K2) die Ausgänge (A1, A2) in einen sicheren Zustand schaltbar sind, wobei
ein Steuerausgang (SA) vorgesehen ist, durch welchen die mindestens zwei Ausgänge (A1, A2) gleichzeitig schaltbar sind, und wobei
mindestens zwei individuelle Steuerausgänge (Q1, Q2) vorgesehen sind, durch welche die mindestens zwei Ausgänge (A1, A2) individuell schaltbar sind, sodass der erste Ausgang (A1) durch den ersten individuellen Steuerausgang (Q1) und der zweite Ausgang (A2) durch den zweiten individuellen Steuerausgang (Q2) schaltbar ist, und wobei die mindestens zwei individuellen Steuerausgänge (Q1, Q2) mit dem zweiten Kanal der Sicherheitsfunktion (K2) jeweils logisch mit UND verbunden sind.

3. Speicherprogrammierbare Steuerung (SPS) gemäß Anspruch 1 oder 2, **dadurch gekennzeichnet, dass** die Funktion zum Not-Halt (NH) durch einen Not-Halt-Taster, vorzugsweise mit mechanischer Verrastfunktion, schaltbar ist, wobei dem zweiten Kanal der Sicherheitsfunktion (K2) eine Haltefunktion für den Not-Halt (HNH) vorgeschaltet ist, welche die Sicherheitsfunktion des zweiten Kanals (K2) aktiviert hält.

4. Speicherprogrammierbare Steuerung (SPS) gemäß Anspruch 3, **dadurch gekennzeichnet, dass** eine Funktion zum Reset für den Not-Halt (RNH) vorgesehen ist, durch welchen die Haltefunktion für den Not-Halt (HNH) schaltbar ist.

5. Speicherprogrammierbare Steuerung (SPS) gemäß Anspruch 4, **dadurch gekennzeichnet, dass** die Funktion zum Reset für den Not-Halt (RNH) durch einen manuell zu bedienenden Taster schaltbar ist, wobei der Ausgang (A) bzw. die Ausgänge (A1, A2) gesetzte Ausgangszustände annehmen.

6. Speicherprogrammierbare Steuerung (SPS) gemäß Anspruch 5, **dadurch gekennzeichnet, dass** der Taster zum Reset für den Not-Halt (RNH) elektrisch gebrückt ist, so dass bei Entriegelung des Tasters für den Not-Halt (NH) die Haltefunktion für den Not-Halt (HNH) zurückgesetzt wird.

7. Speicherprogrammierbare Steuerung (SPS) gemäß einem der vorhergehenden Ansprüche, **dadurch gekennzeichnet, dass** eine Testeinrichtung (T) vorgesehen ist, welche zyklische Tests zur Laufzeit auf potentielle Rückspeisungen durchführt.

8. Speicherprogrammierbare Steuerung (SPS) gemäß Anspruch 7, **dadurch gekennzeichnet, dass** die Steuerung (SPS) einen Haupt-Mikroprozessor (M) umfasst, wobei die Testeinrichtung (T) ausschließlich vom Haupt-Mikroprozessor (M) steuerbar ist.

9. Speicherprogrammierbare Steuerung (SPS) gemäß einem der vorhergehenden Ansprüche, **dadurch gekennzeichnet, dass** der sichere Zustand ein spannungsloser oder energieloser Zustand ist, so dass der Ausgang (A) bzw. die Ausgänge (A1, A2) spannungslos oder energielos sind.

10. Speicherprogrammierbare Steuerung (SPS) gemäß einem der vorhergehenden Ansprüche, **dadurch gekennzeichnet, dass** die Sicherheitsfunktion mit Software-Komponenten sowie mit Hardware-Komponenten realisiert ist, wobei sowohl durch die Software-Komponenten sowie durch die Hardware-Komponente unabhängig voneinander die Funktion zum Not-Halt (NH) aktivierbar ist.

11. Speicherprogrammierbare Steuerung (SPS) gemäß Anspruch 10, **dadurch gekennzeichnet, dass** die Funktion zum Not-Halt (NH) bei Ausfall der Software-Komponenten weiterhin durch die Hardware-Komponenten aktivierbar ist.

12. Speicherprogrammierbare Steuerung (SPS) gemäß einem der vorhergehenden Ansprüche, **dadurch gekennzeichnet, dass** die speicherprogrammierbare Steuerung gemäß einer Sicherheitsnorm betreibbar ist, insbesondere gemäß DIN EN ISO 13849-1:2016-06, insbesondere, dass die Funktion zum Not-Halt (NH) nach DIN EN ISO 13849-1:2016-06 mindestens Performance Level d (PL d) betreibbar ist.

13. Speicherprogrammierbare Steuerung (SPS) gemäß einem der vorhergehenden Ansprüche, **dadurch gekennzeichnet, dass** die Funktion zum Not-Halt (NH) nach DIN EN ISO 13850:2016-05 in der Kategorie 0 betreibbar ist.

14. Speicherprogrammierbare Steuerung (SPS) gemäß einem der vorhergehenden Ansprüche, **dadurch gekennzeichnet, dass** die speicherprogrammierbare Steuerung als eine bauliche Einheit ausgestaltet ist, insbesondere mit integrierter Sicherheitsrelaisfunktion.
